# EUROPEAN PATENT SPECIFICATION

(11) **EP 2 375 054 B1**
(45) Date of publication and mention of the grant of the patent: **19.06.2013**
(21) Application number: 10159128.7
(22) Date of filing: 06.04.2010
(51) Int. Cl.: F02M 69/02, F01N 3/20, F04B 17/04

(54) **Reagent dosing system and pump**
Reagenzdosierungssystem und -pumpe
Système et dosage de réactif et pompe

(43) Date of publication of application: 12.10.2011
(73) Proprietor: Delphi Technologies Holding S.à.r.l., 4940 Bascharage (LU)
(72) Inventor: Cooke, Michael, Gillingham, Kent ME7 1DR (GB)
(74) Representative: Neill, Andrew Peter

(56) References cited:
- EP-A1- 1 748 188
- EP-A1- 1 878 920
- EP-A2- 2 131 020

## Description

### Field of the invention

The present invention relates to a reagent dosing system. In particular, but not exclusively, the invention relates to a reagent dosing system suitable for use in a selective catalytic reduction system for an internal combustion engine, and a pump for use in such a system.

### Background to the invention

It is known in the art to dose a reagent, such as urea solution, into the exhaust system of an internal combustion engine in order to enable a selective catalytic reduction (SCR) catalyst to reduce oxides of nitrogen (NOx) in the exhaust gas stream.

In order to be effective, the reagent must mix quickly and thoroughly with the exhaust gases. It is therefore known to atomise the reagent as it enters the exhaust gas stream by forcing the reagent at high pressure through an atomising nozzle.

The dosing of reagent is typically performed using a pump that is operable to expel reagent through a nozzle. The pump increases the pressure of the reagent to a suitable level to achieve a desired amount of atomisation as the reagent is forced out of the nozzle. Also, by arranging the system so that reagent is ejected from the nozzle only when the pressure of the reagent in the nozzle exceeds a threshold level, the dosing of reagent into the exhaust gas flow can be started and stopped by respectively starting and stopping the operation of the pump. The injection pressure of the reagent is typically around 20 to 40 bar.

In some systems, the pump is located remotely from the nozzle. In this arrangement, reagent is supplied to the pump from a reagent source, and then conveyed from the pump to the nozzle at high pressure using a suitable high-pressure supply line. In other systems, the pump and the nozzle are integrated into a combination device, known as a fluid dosing pump or fluid doser. In such a case, the reagent is conveyed directly from a source to the fluid doser using a plastics or rubber feed pipe. One advantage of using a combined fluid doser, rather than a nozzle and a separate remote pump, is that the feed pipe does not need to carry reagent at a high pressure.

An example of a known fluid doser is described in the Applicant's published European Patent No. 1878920, the contents of which are incorporated herein by reference.

The Applicant's published European Patent Application No. 2131020 discloses a reagent dosing system having a fluid doser comprising a nozzle and a positive-displacement pump, and a priming pump to urge reagent along a supply line to the fluid doser. European Patent Application No. 1748188 describes an example of a known solenoid-operated reagent metering pump without an integrated dosing nozzle.

The reagent used in typical SCR systems is usually water-based, and therefore has a relatively low boiling point in the context of the hot exhaust system with which an SCR system must operate. To ensure optimum operation of the SCR system, it is preferred that boiling or overheating of the reagent be avoided. If boiling does occur, then an incorrect quantity of reagent may be delivered, affecting exhaust gas emissions. Furthermore, boiling or overheating of the reagent can result in deposits being formed in the SCR system that can cause blockages or other failures.

A doser of the type described in EP 1878920 is usually mounted to a hot exhaust system and, accordingly, relies on a combination of insulation and the cooling effect provided by the reagent fluid being pumped through it in order to prevent overheating. The feed pipe that supplies such a fluid doser with reagent is, as far as is practicable, routed away from the hot components of the exhaust system in an area of the vehicle that is exposed to a cooling air flow when the vehicle is moving. The feed pipe is also cooled by the reagent fluid being pumped through it, and may also be insulated so as to guard against overheating.

In some circumstances, however, the likelihood of overheating of the reagent in the feed pipe can be increased beyond normally-expected levels. The exhaust systems of modern diesel engines are typically fitted with diesel particulate filters (DPF) to remove soot from the exhaust gas stream. A DPF requires periodic "regeneration", which involves raising the temperature of the exhaust gases to a higher than normal temperature in order to burn off the soot trapped in the DPF. Occasionally, an "extreme regeneration" is required, during which the exhaust gases are raised to a temperature even greater than during the normal regeneration process.

During an "extreme regeneration" event, the high exhaust gas temperatures tend to release ammonia stored in the SCR catalyst, which is able to reduce all the oxides of nitrogen present. Accordingly, in such circumstances it is not desirable to dose reagent using the doser because the reagent is not required for SCR and is wasted. However, by reducing or stopping dosing, the cooling effect of reagent flow through the pump and the feed line ceases. This, coupled with the unusually high exhaust gas temperatures that occur during regeneration events, significantly increases the risk of overheating of the reagent.

Similarly, when a vehicle is parked after use, reagent dosing and the associated cooling stops. Also, in these circumstances, because the vehicle is stationary, there is no air flow to cool the exhaust system and the feed pipe. Consequently, heat from the hot exhaust system tends to dissipate into surrounding components, increasing the risk of overheating in the feed pipe. Similar problems can arise when a vehicle is used for slow-speed, high-load operations, such as towing a trailer up a gradient, when the exhaust gases will be particularly hot and little air flow cooling will occur.

Furthermore, when vehicles are parked in environments with high ambient temperatures, such as deserts, the components of the reagent dosing system may already be at a relatively high temperature even before the vehicle is operated and the exhaust system becomes hot. For instance, after standing for some time in a hot environment, the reagent in the storage tank of the SCR system could be at a temperature of 60°C or more. It will be appreciated that, as the temperature of the reagent in the storage tank rises, the cooling effect of the reagent flow when the SCR system is operational will be reduced.

When vehicles are operated at high altitudes, further problems can arise. The boiling point of a urea-based reagent under normal conditions is approximately 100°C, but at high altitudes the boiling point decreases, making it more likely that the reagent will boil unless its temperature can be maintained at a correspondingly lower level. At 4000 m above sea level, for example, the boiling point of a urea-based reagent drops to approximately 85°C.

It will be appreciated that several of the above-described circumstances could arise at the same time, leading to a significant chance of overheating of reagent in the supply line. In one scenario, for example, a vehicle could be parked in a hot environment so that the reagent is at an elevated starting temperature. The vehicle could then be used to tow a trailer up a mountain, putting the engine under high load (thereby creating particularly hot exhaust gases), with little cooling airflow past the exhaust. At the same time, the increasing altitude lowers the boiling point of the reagent. During the towing operation, a DPF regeneration event may be triggered by the engine electronic control unit (ECU), raising the exhaust temperature to 650°C or more to burn soot from the filter. As the regeneration event is occurring, the driver may finish the operation and switch off the engine, allowing the heat in the exhaust to soak into the surrounding components, such as the feed pipe.

It would be desirable to provide a reagent dosing system which reduces the likelihood of overheating or boiling of the reagent.

### Summary of the invention

Against this background, in a first aspect of the invention, a pump for pressurising reagent in a supply line of a reagent dosing system is provided. The pump comprises inlet means for receiving reagent from a reagent source, outlet means for delivering reagent to the supply line, a solenoid-actuated pumping arrangement operable to pump reagent from the inlet means to the outlet means so as to increase the pressure of reagent at the outlet means, and outlet valve means operable to prevent reagent from flowing between the outlet means and the pumping arrangement. The pump is arranged such that, when the pumping arrangement is not operating, the outlet valve means is held in an open position so as to allow reagent to flow from the inlet means to the outlet means through the pumping arrangement.

The provision of the outlet valve means is necessary to allow reagent to be drawn from the inlet means during operation of the pumping arrangement, even when the outlet means is at a higher pressure than the inlet means. However, because the outlet valve means is held in its open position when the pumping arrangement is not operating, reagent can be drawn through the pump when necessary even when the pump is switched off.

The pumping arrangement may be arranged to engage with the outlet valve means when the pumping arrangement is not operating, so as to hold the outlet valve means in an open position. In this way, the use of a separate mechanism to control the outlet valve means is not necessary.

In one embodiment, the pumping arrangement comprises a solenoid actuator, a pumping chamber disposed between the inlet means and the outlet means of the pump, and a pumping element arranged for reciprocal movement within the pumping chamber in response to energisation and de-energisation of the solenoid actuator during operation of the pumping arrangement. The pumping element preferably engages with the outlet valve means when the pumping arrangement is not operating so as to hold the outlet valve means in an open position.

The solenoid actuator may comprise an inner pole piece, a yoke, and an outer pole piece. The pumping element may be arranged coaxially with the inner pole piece, and the outer pole piece may at least partially surround the pumping element. The pumping element may form an armature of the solenoid actuator. Preferably, to aid cooling and reduce the cost of the pump, at least a part of the yoke and/or at least a part of the outer pole piece may form an outer surface of the pump. For example, substantially all of an outer surface of the yoke may be exposed to form an outer surface of the pump.

The inlet means, the inner pole piece, the pumping element and the outlet means may be arranged along a common axis.

The outlet valve means may comprise a valve member that is biased against a seating surface, and the pumping element may be biased towards the valve member to hold the valve member away from the seating surface when the pumping arrangement is not operating. The valve member may, for example, comprise a ball. In one embodiment, the pumping element has a projection arranged to engage with the outlet valve means when the pumping arrangement is not operating.

The solenoid actuator may comprise a solenoid coil. The solenoid coil may be supported on a coil former. The coil former may form part of the outlet valve means. For example, the coil former may comprise the seating surface of the outlet valve means.

The pump may further comprise a pumping volume disposed between the pumping element and the outlet valve means, and inlet valve means operable to prevent reagent from flowing from the pumping volume to the inlet means.

The pumping element may be arranged to increase the size of the pumping volume during movement of the pumping element in a filling stroke, for example upon energisation of the solenoid actuator, and to decrease the size of the pumping volume during movement of the pumping element in a pumping stroke, for example during de-energisation of the solenoid actuator. Closure of the outlet valve means allows fluid to be drawn into the pumping volume during the filling stroke, and closure of the inlet valve means allows the pressure in the pumping volume to increase during the pumping stroke.

In one embodiment, the inlet valve means comprises a valve element moveable with respect to the pumping element between a first position, in which reagent can flow between the inlet means and the pumping volume, and a second position, in which the valve element prevents reagent from flowing between the inlet means and the pumping volume.

The valve element may be mounted on the pumping element. For example, the valve element may be an annular washer or disc-shaped member having a central aperture for mounting on a projection of the pumping element. The valve element may be mounted between a face of the pumping element and a stop means, such as a collar of a projection, in which case the distance between the face of the pumping element and the stop means may be greater than the thickness of the valve element so as to allow the valve element to move with respect to the pumping element.

The pump may comprise communication means to allow reagent to flow from the inlet means when the valve element is in the first position, the communication means being closed by the valve element when the valve element is in its second position.

The communication means may comprise one or more apertures in the valve element arranged such that, when the valve element is in its second position, the or each aperture is closed by the pumping element. For example, in its second position, the washer may abut a face of the pumping element so as to close the passages.

In one example, the valve element comprises a washer having one or more passages, mounted coaxially with the pumping element.

In another example, the valve element comprises a ring arranged coaxially with the pumping element. In this example, the communication means may comprise a radial clearance between the ring and the pumping element. The ring may be a split-ring, so as to allow the ring to be mounted on a projection of the pumping element.

The communication means may comprise, or further comprise, one or more passages in the pumping element. For example, the passages in the pumping element may open to a face of the pumping element, and the valve member may be arranged to abut or seal against the face of the pumping element in its second position so as to close the passages.

The communication means may comprise a gallery defined in part by the pumping element and in part by the pumping chamber. For example, the gallery may be defined by a reduced-diameter region of the pumping element.

In one embodiment, the valve element is caused to move into the first position upon energisation of the actuator, and into the second position upon de-energisation of the actuator. Alternatively, the valve element may be caused to move into the first position upon de-energisation of the actuator, and into the second position upon energisation of the actuator.

The valve element may be moveable into the first position by reagent flow through the pump when the pumping arrangement is not operating.

It may be desirable to prevent reagent leaking through the pump from the outlet means to the inlet means, for example when the pumping arrangement is not operating and when the outlet means is at a higher pressure than the inlet means. Accordingly, a valve element of the inlet valve means may be in sealing engagement with a wall of the pumping chamber to prevent flow of reagent between the valve element and the wall. Alternatively, or in addition, the pumping element may comprise a sealing member to prevent flow of reagent past the pumping element between the pumping element and the wall.

The pump may comprise a biasing spring to bias the pumping element towards the outlet means. The biasing spring may apply a biasing force to the pumping element that decreases as the pumping element moves towards the outlet means.

It may be desirable that the pump is configured to maintain the pressure of reagent at the outlet means when the pump is not operating, for example to maintain the pressure in a supply line when the engine has been switched off. Accordingly, in one embodiment of the pump, when the pumping arrangement is not operating, the pressure of reagent at the outlet means is maintained by the biasing spring.

From a second aspect, the present invention resides in a reagent dosing system for an internal combustion engine having an exhaust pipe, the system comprising a first pump having inlet means for receiving reagent from a reagent source and outlet means for delivering the reagent to a supply line, and a fluid dosing device downstream of the first pump. The fluid dosing device comprises a nozzle and a second pump for receiving the reagent from the supply line and for delivering the reagent to the nozzle. The second pump is operable to increase the pressure of the reagent in the nozzle to an injection pressure so as to cause delivery of the reagent through the nozzle, and the first pump is operable to increase the pressure of reagent in the supply line to a pressure that is less than the injection pressure so as to guard against overheating of the reagent in the supply line. The first pump is in accordance with the first aspect of the invention.

By increasing the pressure of reagent in the supply line, the boiling point of the reagent is increased. Therefore, the pressurised reagent can reach higher temperatures before it boils, thereby reducing the risk of the system failing or operating poorly.

The reagent dosing system may further comprise control means arranged to operate the first pump selectively according to an operating condition of the reagent dosing system and/or the internal combustion engine. The control means may be arranged to monitor at least one operating or environmental condition of the reagent dosing system and/or the engine to determine when overheating of reagent in the supply line is likely to occur, and to operate the first pump when it is determined that overheating of reagent in the supply line is likely to occur.

In this way, the reagent in the supply line can be pressurised only when there is a risk of the supply line being exposed to high temperatures, for example during a diesel particulate filter regeneration event, when there is little or no cooling air flow around the line, when the engine is operating under high load conditions or has just been switched off, and so on. When it is determined that overheating or boiling of the reagent in the supply line is not likely to occur, the first pump can remain switched off so as to reduce the energy consumption of the system. It is to be noted that the function of the first pump is to cause an appreciable increase in the boiling point of the reagent in the supply line, and therefore the first pump does not merely serve to deliver reagent to the fluid dosing device.

The first pump preferably raises the pressure in the supply line to a pressure greater than approximately 2 bar. More preferably, the first pump raises the pressure in the supply line to a pressure within a range of from approximately 2 bar to approximately 5 bar. The injection pressure is preferably greater than approximately 15 bar, and more preferably within a range of from approximately 20 bar to approximately 40 bar.

To allow delivery of reagent to the fluid dosing device irrespective of whether the first pump is operating, the first pump is of a type according to the first aspect of the invention that allows reagent to flow from its inlet means to its outlet means with little or no restriction when the pump is not operating, so that operation of the second pump in the fluid dosing device can draw reagent from the reagent source.

As mentioned above, because the outlet valve means of the pump of the first aspect is held in its open position when the pumping arrangement is not operating, reagent can be drawn through the pump when necessary even when the pump is switched off.

### Brief description of the drawings

Embodiments of the present invention will now be described, by way of example only, with reference to the accompanying drawings, in which like reference numerals are used for like features and in which:
Figure 1 is a schematic diagram of a reagent dosing system in which a pump according to the present invention may be used;
Figure 2 is an exterior view of a pump according to the present invention and suitable for use in the reagent dosing system of Figure 1;
Figure 3 is a cross-sectional view of the pump of Figure 2;
Figures 4(a), 4(b) and 4(c) are enlarged cross-sectional views of part of the pump of Figure 2 showing a piston and an outlet valve of the pump in first, second and third operational configurations;
Figure 5 is a cross-sectional view of part of another pump according to the present invention; and
Figure 6 is a cross-sectional view of part of still another pump according to the present invention.

Throughout this specification, the terms 'upstream' and 'downstream' are used in relation to the normal flow direction of reagent in the reagent dosing system during its operation or, where the context demands, to the normal flow direction of exhaust gases in an exhaust system with which the reagent dosing system operates.

### Detailed description of preferred embodiments of the invention

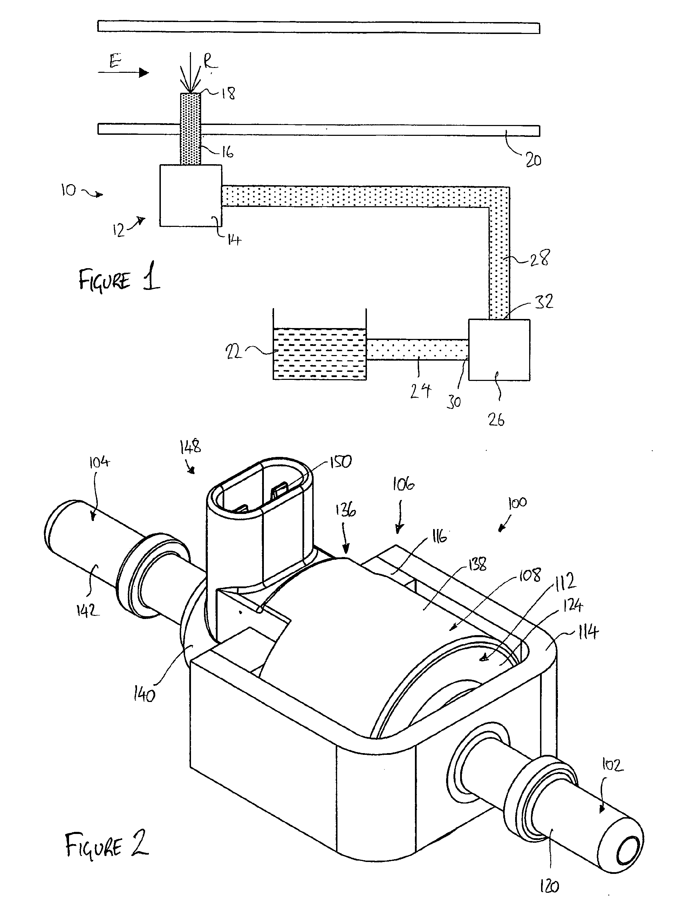

Figure 1 illustrates, schematically, a reagent dosing system 10. The reagent dosing system 10 comprises a fluid dosing pump or doser 12, for example of the type disclosed in EP 1878920. The doser 12 comprises an injection pump 14 and a nozzle 16.

The reagent dosing system 10 also comprises a reagent source such as a tank 22. In use, the tank 22 contains a suitable selective catalytic reduction (SCR) reagent, such as a urea solution. The reagent doser 12 is fed with reagent from the tank 22 by way of a first supply pipe 24, a line pressurising pump 26, and a second supply pipe 28.

In use, the doser 12 is mounted so that an end 18 of the nozzle 16 is located within the bore of an exhaust pipe 20 of an internal combustion engine. During operation of the engine, the exhaust pipe 20 carries a flow or stream of exhaust gases (denoted by arrow E in Figure 1) past the end 18 of the nozzle 16. The exhaust pipe 20 carries the exhaust gases to an SCR catalyst (not shown), downstream of the doser 12.

When necessary, reagent is dosed into the exhaust pipe 20 by operation of the injection pump 14, for example as described in EP 1878920. The end 18 of the nozzle 16, which may include a valve (not shown), is arranged to atomise the reagent as it passes out of the nozzle 16, so that the reagent forms a fine mist or spray (denoted R in Figure 1) in the exhaust pipe 20. In this way, the reagent mixes with the exhaust gases E flowing in the exhaust pipe 20.

It will be appreciated that the relationship between the dosing device 12 and the exhaust pipe 20 shown in Figure 1 is for illustrative purposes only, and in practice the dosing device 12 would be arranged with respect to the exhaust pipe 20 in such a way as to optimise the performance of the reagent dosing system 10. In particular the angle between the nozzle 16 and the exhaust pipe 20, and the position of the end 18 of the nozzle 16 relative to the walls of the exhaust pipe 20 may differ considerably from the arrangement shown in Figure 1.

The line pressurising pump 26 comprises an input 30 and an output 32 for reagent. The input 30 is connected to the first supply line 24 to receive reagent from the tank 22. The output 32 delivers reagent to the second supply line 28, which conveys the reagent to the reagent doser 12. When operated, the line pressurising pump 26 increases the pressure of reagent at the output 32, and therefore in the second supply line 28. When the line pressurising pump 26 is not operated, however, the pump 26 allows reagent to pass freely from its input 30 to its output 32.

In addition to the requirement that the pump 26 must allow reagent to flow through the pump even when the pump is not in operation, the pump 26 must also be able to increase the pressure of reagent at the output 32 at the relatively low flow rates of reagent that occur in the reagent dosing system 10. It is preferable that the line pressurising pump 26 is able to self-regulate the pressure of reagent at the output 32, without the need for an additional pressure sensing and feedback system.

Suitable examples of line pressurising pumps will be described below with reference to Figures 2 to 6, but it will be understood that the above-described reagent dosing system 10 is not limited to the use of such a pump.

The tank 22, the first supply line 24 and the line pressurising pump 26 are each preferably mounted to the vehicle in a cool location away from the exhaust system. At least part of the second supply line 28, by contrast, must necessarily come closer to the hot exhaust system in order to reach the reagent doser 12.

The reagent in the second supply line 28 is therefore vulnerable to overheating and boiling, particularly when environmental and/or operating conditions lead to an increase in the temperature of the supply line 28, a decrease in the cooling effect provided by air flowing around the line 28, or an interruption in the flow of reagent through the line 28 when dosing of the reagent stops. For instance, overheating is more likely during diesel particulate filter (DPF) regeneration events, or when the vehicle is subject to high ambient temperatures, low atmospheric pressures or is operating under high engine load conditions at low speeds.

To guard against overheating or boiling of the reagent, the line pressurising pump 26 can be operated to increase the pressure of the reagent in the second supply line 28. By virtue of the pressure increase, the boiling point of the reagent is increased, so that the reagent is less likely to boil. Accordingly, the reagent dosing system offers a solution to the problem of overheating or boiling of the reagent in the supply lines to the reagent doser 12.

In most applications, the reagent in the second supply line 28 is only likely to boil under rare circumstances, such as when several operating and/or environmental conditions that each give rise to an increase in the temperature of the reagent occur together. To avoid wasting energy, it is therefore preferred that the line pressurising pump 26 is switched off when the risk of boiling of the reagent is low. As noted above, when the line pressurising pump 26 is not operating, reagent can still flow through the pump 26 from the inlet 30 to the outlet 32 to reach the reagent doser 12. Therefore reagent can be injected into the exhaust pipe 20 whether or not the line pressurising pump 26 is operating.

When operating, the line pressurising pump 26 raises the pressure of reagent in the supply line 28 to a sufficient extent to increase the boiling point of the reagent by a suitable amount to avoid boiling. For example, the line pressurising pump 26 may raise the pressure of reagent in the supply line 28 to between approximately 2 and 5 bar.

The system is preferably arranged so that the maximum pressure of reagent in the supply line 28 is relatively modest compared to the pressure of reagent in the nozzle 16 of the reagent doser 12 when reagent dosing occurs, which is typically between 20 and 40 bar. Accordingly, the second supply line 28 need not be designed to withstand high reagent pressures, and the second supply line 28 can therefore be made from a plastics or rubber material.

A control system (not shown) may be provided to control independently the operation of the injection pump 14 of the reagent doser 12 and the line pressurising pump 26. The control system may include an electronic control unit (ECU), which may optionally be integrated with the ECU of the engine. The control system provides suitable electrical outputs to the injection pump 14 and the line pressurising pump 26 to cause operation of the respective pumps 14, 26 to start and stop when required.

As is known in the art, the control system is arranged to start the injection pump 14 of the fluid doser 12 when it is necessary to introduce reagent into the exhaust gas stream E, and to stop the injection pump 14 when it is necessary to stop the reagent flow, for example when the engine is switched off or during a high-temperature DPF regeneration event.

The control system may also be arranged to monitor one or more operating conditions of the reagent dosing system 10, the exhaust system, the engine or the vehicle, in order to determine whether there is a risk of boiling or overheating of the reagent in the second supply line 28. If it is determined that there is a risk of boiling or overheating, the control system activates the line pressurising pump 26 until such time that the risk of boiling or overheating subsides.

For example, the control system may monitor one or more relevant temperatures, such as the temperature of the reagent in the reagent dosing system 10, the temperature of components of the reagent dosing system 10 and/or the exhaust system, the temperature of the exhaust gas stream E, and the ambient temperature. The control system may also monitor other factors, such as the amount of cooling air flow, the vehicle speed, the atmospheric pressure, the engine load, and the occurrence of DPF regeneration or extreme regeneration events. As would be appreciated by a person skilled in the art, the control system could compare the monitored parameters with predetermined values, for example using look-up tables, in order to identify when the line pressurising pump 26 should be switched on or off.

In the reagent dosing system 10 of Figure 1, only the second supply line 28 is pressurised when the line pressurising pump 26 operates. Such an arrangement is suitable in applications where the first supply line 24 can be mounted away from any sources of significant heat, so that there is no risk of overheating of the reagent carried by the first supply line 24. In Figure 1, the first supply line 24 is relatively short and the second supply line 28 is relatively long. However, it will be appreciated that the relative lengths of each supply line 24, 28 will be selected appropriately for each application of the reagent dosing system 10.

In some cases, it may be necessary or desirable to pressurise the reagent for its entire journey from the tank 22 to the fluid doser 12. In such cases, the line pressurising pump 26 can be integrated with, or mounted on an output of, the tank 22.

A pump according to the present invention which is suitable for use as the line pressurising pump 26 of the reagent dosing system 10 of Figure 1 will now be described with reference to Figures 2 to 4.

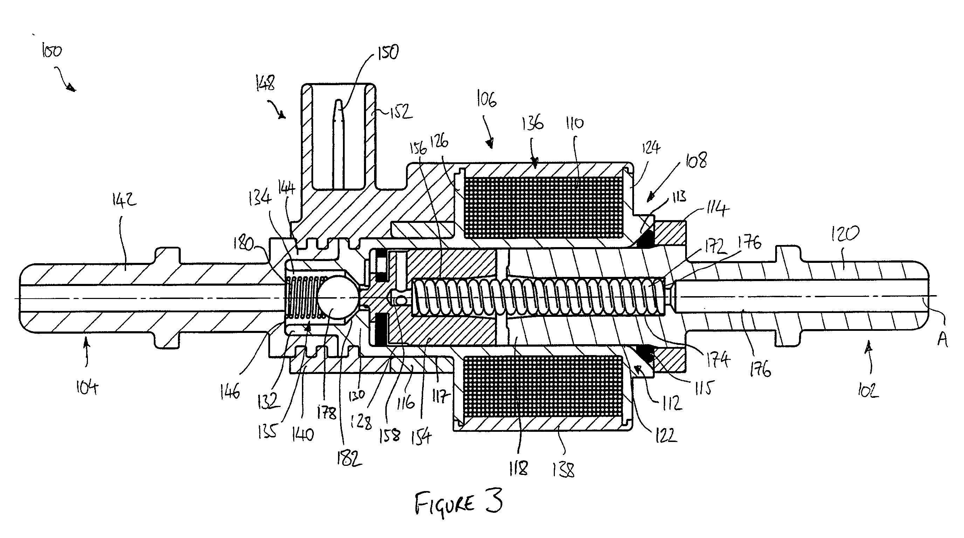

Figure 2 shows the outside of the pump 100, and Figure 3 shows the pump 100 in cross-section. The pump 100 comprises inlet means 102, outlet means 104, and a pump body 106, arranged linearly along a common axis A. Throughout the remainder of this description, the terms 'inlet end' and 'outlet end' should be construed as referring to the ends of the pump or relevant pump component closest to the inlet means 102 (right-hand side in Figures 2 and 3) and the outlet means 104 (left-hand side in Figures 2 and 3), respectively.

A solenoid actuator 108 is mounted in the pump body 106. The actuator 108 comprises a solenoid coil 110 mounted on a coil former 112, a U-shaped yoke 114 (shown most clearly in Figure 2), and an outer pole piece 116. The base of the U-shape of the yoke 114 is towards the inlet end of the pump, and the arms of the U-shape of the yoke 114 extend alongside the coil 110, parallel to the axis A, to connect with the outer pole piece 116 towards the outlet end of the pump 100. The outer pole piece 116 comprises a rectangular plate with a central aperture 117. The outer pole piece 116 passes diametrically through the pump body 106, between the arms of the yoke 114.

As can be appreciated from Figure 2, in this embodiment the yoke 114 and parts of the outer pole piece 116 of the pump 100 are not enclosed in the pump body 106, but are instead exposed to the environment outside the pump 100. Such an 'open frame' arrangement is advantageous in reducing cost and improving heat dissipation from the pump, compared to pumps in which all of the pump components are enclosed.

The actuator 108 further comprises a generally tubular inner pole piece 118. The inner pole piece 118 is formed integrally with a tubular inlet port 120 that extends along the axis A from the inner pole piece 118 to form the inlet means 102 of the pump 100. The inner pole piece 118 extends into the pump body 106 through an aperture in the base of the U-shape of the yoke 114.

The coil former 112 is generally tubular and defines a central cylindrical recess 122 that partially receives the inner pole piece 118. The solenoid coil 110 is wound around the coil former 112 so that the coil 110 partially overlaps the inner pole piece 118, with the coil former 112 separating the coil 110 from the inner pole piece 118. The coil former 112 includes two annular walls 124, 126 that extend radially outwards, away from the recess 122, to embrace the coil 110 therebetween.

As shown most clearly in Figure 3, the recess 122 of the coil former 112 extends beyond the coil 110, away from the inner pole piece 118 and through the aperture 117 in the outer pole piece 116, to define a piston chamber 128. The end of the piston chamber 128 closest to the outlet means 104 is defined by an end wall 130 of the coil former 118. A short tubular projection 132 of the coil former 112 extends from its end wall 130 towards the outlet end of the pump 100 to define an outlet valve chamber 134. The end wall 130 includes a central aperture 131 to allow fluid flow between the piston chamber 128 and the outlet valve chamber 134.

The end of the coil former 112 closest to the inlet end of the pump 100 is provided with an annular projection 113 having a chamfer on its innermost surface. The yoke 114 abuts the projection 113, and an o-ring 115 is provided to form a seal between the coil former 112 and the inner pole piece 118 to guard against leakage of fluid from the piston chamber 128.

The pump body 106 includes a housing 136. Towards the inlet end of the pump 100, the housing is formed into a tubular shroud 138 for the coil 110. The remainder of the housing 136, towards the outlet end of the pump 100, comprises a generally tubular outlet end portion 140 having a smaller outside diameter than the shroud 138. The outlet end portion 140 of the housing 136 receives the outlet end portion of the coil former 112.

The outlet means 104 of the pump 100 comprises a tubular outlet port 142. At the end of the outlet port 142 closest to the inlet end of the pump 100, an enlarged diameter portion 144 of the outlet port 142 is sealingly engaged with the outlet end portion 140 of the housing 136. The tubular projection 132 of the coil former 112 extends into and engages with the enlarged diameter portion 144 of the outlet port 142, so that an end wall of the outlet valve chamber 134 is defined by a shoulder 146 formed where the enlarged diameter portion 144 meets the remainder of the outlet port 142.

The pump 100 is provided with electrical connector means 148. The connector means 148 comprises connector pins 150 that are electrically connected to the coil 110. In this way, an electrical current can be supplied to the coil 110 to cause operation of the actuator 108. The connector means 148 further comprises a shroud 152 that surrounds the connector pins 150 and provides a clip or other fastening means (not shown) to facilitate secure connection of an electrical supply cable with a corresponding connector (not shown) to the pump 110.

The piston chamber 128 houses a generally cylindrical piston 154, which is slidingly received within the bore of the coil former 112. A spring recess 156 extends from the inlet end of the piston 154 towards the outlet end of the piston 154. The spring recess terminates in a blind bore 158. Radial passages or drillings 160 extend from the blind bore 158 to the outside of the piston 154.

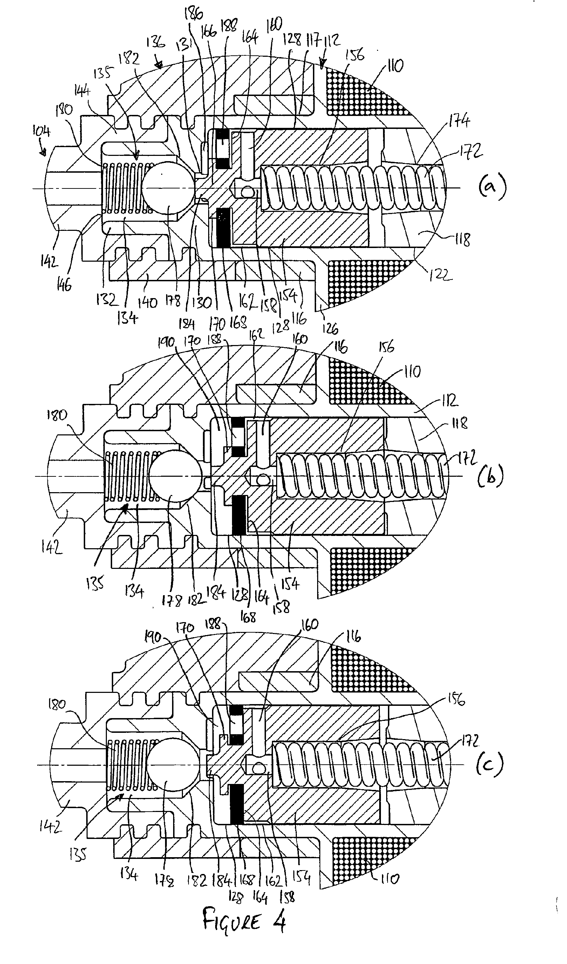

As shown most clearly in Figure 4(a), the outside diameter of the piston 154 substantially matches the inside diameter of the piston chamber 128 of the coil former 112 along a majority of the length of the piston 154. However, towards the outlet end of the pump 154, the piston 154 is provided with a portion having a slightly reduced outside diameter to define an annular gallery 162. The radial passages 160 open into the annular gallery 162.

An end face 164 of the piston 154 closest to the outlet end of the pump 100 is provided with an axial cylindrical projection 166. An annular sealing washer 168 is fitted onto the projection 164, and is retained by an annular collar 170. The axial distance between the collar 170 and the end face 164 of the piston is slightly larger than the thickness of the sealing washer 168, so that the washer 168 can slide on the projection 166 in the axial direction. The periphery of the sealing washer 168 abuts the inner wall of the piston chamber 128 so as to prevent fluid flow past the sealing washer 168 under certain conditions, as will be explained in more detail below. In this way, the sealing washer 168 functions as inlet valve means for the pump 100.

A biasing spring 172, in the form of a compression spring, is provided to bias the piston 154 towards the outlet end of the pump 100. One end of the biasing spring 172 is received in the spring recess 156 in the piston 154, and acts against the internal shoulder defined where the spring recess 156 meets the blind bore 158 in the piston 154. The other end of the biasing spring 172 extends into the bore 174 of the tubular inner pole piece 118, and acts against an internal shoulder 176 of the inner pole piece 118 defined where the bore 174 of the inner pole piece 118 meets the bore 176 of the inlet port 120.

Movement of the piston 154 towards the outlet end of the pump 100 is stopped when the collar 170 abuts the end wall 130 of the coil former 118. The collar 170 and the end wall 130 therefore define stop means for the piston 154, in which the piston 154 is in a rest position as shown in Figures 3 and 4(a).

The outlet valve chamber 134 houses an outlet valve 135 comprising a valve ball 178 and a valve spring 180. The side of the end wall 130 of the coil former 118 closest to the outlet end of the pump 100 defines a frusto-conical seating surface 182 for the valve ball 178. The valve spring 180 comprises a compression spring that acts against the shoulder 146 of the outlet means 104 and against the valve ball 178. In this way, the valve ball 178 is biased towards the seating surface 182 by the valve spring 180.

However, when the piston 154 is in its rest position, with the collar 170 in abutment with the end wall 130 of the coil former 112, the valve ball 178 is prevented from seating on the seating surface 182 by a cylindrical land 184 that extends from the projection 166 of the piston 154. The land 184 is dimensioned so that, with the piston 154 in the rest position, the land 184 extends far enough through the aperture 131 in the end wall 130 to push the ball 178 away from the seating surface 182. The diameter of the land 184 is smaller than the diameter of the aperture 131, so that the land 184 does not prevent fluid flow through the aperture 131. The biasing spring 172 applies a relatively large force to the piston 154, which overcomes the relatively small force applied to the ball 178 by the valve spring 180.

Radial grooves 186 are provided in the face of the end wall 130 of the coil former 112 that faces the inlet end of the pump 100. The grooves 186 open into the aperture 131, and extend radially beyond the diameter of the collar 170 of the piston 154. When the collar 170 of the piston abuts the end wall 130 in the rest position of the piston 154, the grooves 186 provide a flow path for fluid past the collar 170 and into the aperture 131.

The pump 100 of Figures 2, 3 and 4 may be used as the line pressurising pump 26 in the system of Figure 1. As in the example shown in Figure 1, in use in such an application, the inlet port 120 of the port is connected to a source of reagent, optionally by way of a first supply line, and the outlet port 142 is connected to a second supply line that delivers reagent to a reagent doser.

As explained with reference to Figure 1, under normal conditions the pump 100 (in use as the line pressurising pump 26) is not operated. Thus no current is supplied to the coil 110, and the piston 154 is biased into the rest position by the spring 172. When the reagent doser operates, the pressure in the outlet means 104 of the pump falls. Reagent is therefore drawn through the pump 100, as will now be described.

In the rest position, illustrated in Figure 4(a), reagent can flow from the inlet port 120 into the piston chamber 128, by way of the bore 174 of the inner pole piece 118. From the piston chamber 128, reagent can flow into the annular gallery 162 by way of the spring recess 156, the blind bore 158, and the radial drillings 160.

The pressure drop in the outlet port 142 of the pump 100, caused by operation of the reagent doser, results in the pressure of reagent in the outlet valve chamber 134 dropping below the pressure of reagent in the annular gallery 162. A pressure difference therefore exists across the sealing washer 168, which biases the sealing washer 168 towards the outlet end of the pump 100, creating a clearance between the sealing washer 168 and the end face 164 of the piston 154.

A plurality of filling holes 188 (only one of which is visible in Figure 4(a)) are provided in the sealing washer 168, to allow reagent to pass from the annular gallery 162 into the aperture 131 in the end wall 130 of the coil former 112. Because the ball 178 of the outlet valve 135 is unseated, by virtue of the position of the land 184 on the outlet end of the piston 154, reagent can flow from the aperture 131 into the outlet valve chamber 134, and subsequently into the outlet port 142 for delivery to the fluid doser. In this way, the pump 100 provides a flow path for reagent from the inlet means 102 to the outlet means 104 when the pump 100 is not operating.

Use of the pump 100 to increase the pressure at the outlet means 104, and hence in the supply line to the fluid doser, will now be described.

Referring back to Figures 2 and 3, the actuator 108 of the pump 100 is operable to cause the piston 154 to reciprocate within the piston chamber 128. When a current is applied to the coil 110, via the connection means 148, a toroidal magnetic field is set up around the coil 110. The yoke 114, outer pole piece 116, inner pole piece 118 and piston 154 carry the magnetic field in a circuit around the coil 110. In this way, the piston 154 acts as an armature of the actuator 108, and is pulled away from its rest position, against the force of the biasing spring 172, towards the inner pole piece 118 by the action of the magnetic field to perform a filling stroke.

Figure 4(b) shows the pump 100 when the piston 154 is at the furthest extent of its travel towards the inlet end of the pump 100, at the end of the filling stroke. In this position, the piston 154 abuts the inner pole piece 118.

Movement of the piston 154 towards the inlet end of the pump 100 causes the land 184 to part from the ball 178. Under the biasing force of the valve spring 180, the ball 178 seals against the seating surface 182 of the coil former 112. The outlet valve 135 is therefore closed, preventing flow of reagent from the piston chamber 128 to the outlet port 142.

The portion of the piston chamber 128 on the outlet end side of the sealing washer 168 defines a pumping volume 190. When the piston 154 is pulled towards the inlet end of the pump 100, the size of the pumping volume 190 increases. The closed outlet valve 135 prevents reagent flowing from the outlet valve chamber 134 to fill the pumping volume 190. Instead, reagent flows from the inlet port 120 into the pumping volume 190, by way of the spring recess 156 in the piston 154, the blind bore 158, the radial drillings 160, the annular gallery 162 and the filling holes 188 in the sealing washer 168. The movement of the piston 154 during the filling stroke ensures that the sealing washer 168 remains abutted against the collar 170, to maintain the clearance between the sealing washer 168 and the end face 164 of the piston 154.

Operation of the pump continues by switching off the current to de-energise the coil 110. The biasing spring 172 pushes the piston 154 in a pumping stroke back towards the outlet end of the pump, away from the inner pole piece 118. Figure 4(c) shows the pump 100 during the pumping stroke.

As the piston 154 moves away from the inner pole piece 118, the sealing washer 168 is pushed against the face 164 of the piston 154, which seals the filling holes 188. The size of the pumping volume 190 decreases as the piston 154 moves towards the outlet end of the pump, and, since reagent cannot flow past the sealing washer 168, the pressure of reagent in the pumping volume 190 increases. The increased pressure in the pumping volume 190 causes the outlet valve 135 to open against the relatively small force of the valve spring 180. Accordingly, the increased pressure in the pumping volume 190 is communicated to the outlet port 142 and to the supply line to the fluid doser, resulting in an increase in pressure in the supply line.

At the end of the pumping stroke, the coil 110 can be re-energised in order to start another filling stroke, thereby returning the piston 154 to the position shown in Figure 4(b). Repeated energisation and de-energisation of the coil 110, for example by supplying the coil 110 with a pulsed direct current or an alternating current, results in reciprocation of the piston 154 so as to increase and maintain the pressure of reagent at the output means 104 of the pump 100.

The rise in pressure in the pumping volume 190, and hence the rise in pressure in the supply line, is determined by the force characteristics of the biasing spring 172. The biasing spring 172 can be chosen to have a relatively low spring rate, so that the pressure applied to the reagent by the piston 154 and the sealing washer 168 is relatively constant throughout the pumping stroke of the piston 154. Alternatively, the biasing spring 172 could be chosen to have a higher spring rate, so that the force applied by the spring 172 is more closely matched to the force characteristic of the solenoid actuator 108. The force applied to the piston 154 when the coil 110 is energised increases as the piston 154 approaches the inner pole piece 118. Consequently, by selecting the spring 172 so that the return force it applies to the piston 154 likewise increases as the piston 154 approaches the inner pole piece 118, the efficiency of the pump 110 can be improved.

An additional degree of control of the output pressure of the pump 100 can be achieved by selecting a biasing spring 172 having a force characteristic that varies as the spring 172 extends during a pumping stroke.

For example, in one embodiment, the spring 172 is designed so that, at the start of the pumping stroke, the spring 172 provides a maximum force sufficient to pressurise the reagent at the output means 104 to approximately 5 bar. As the spring 172 extends, the force applied by the spring 172 decays so that, at the end of the pumping stroke, the pressure at the reagent at the output means 104 is approximately 2 bar. In this embodiment, if it is necessary to increase the pressure of reagent at the output means 104 by only a small amount, then the piston 154 can be allowed to travel the full distance of the pumping stroke before the coil 110 is re-energised to start the next filling stroke. However, if it is necessary to increase the pressure of reagent at the output means 104 to a higher value, then coil 110 can be re-energised more frequently, such that the piston 154 reciprocates at the high-pressure end of its stroke. It will be appreciated that a suitable control system would be provided to calculate the frequency of re-energisation required to maintain the desired supply line pressure, taking into account the rate of dosing of reagent into the exhaust by the fluid doser.

When the engine is switched off, it is desirable that the pump 100 maintains the pressure at the outlet means 104 at least until any heat soak from the hot exhaust system has subsided. This is achieved in the present pump 100 provided that the rate of leakage of reagent past the sealing washer 168 is low or zero, as will now be explained.

After operation of the pump, the reagent at the outlet means 104 is at a higher pressure than the reagent at the inlet means 102. If dosing of the reagent into the exhaust gas stream has ceased, then the pressure at the outlet means 104 will not decay. Consequently, the sealing washer 168 remains pressed against the end face of the piston 164, closing the filling holes 188 and preventing reagent from flowing back towards the inlet means 102. The pressure at the outlet means 104 is thereby maintained by the biasing spring 172.

To mitigate the increased risk of the reagent in the supply line boiling due to heat soak after the engine is switched off, the coil 110 may be energised briefly as the engine is switched off in order to set the piston 154 to the high-pressure end of its pumping stroke.

In cold environments, it is possible that the reagent could freeze in the pump 100, resulting in potentially damaging expansion of the reagent. However, by virtue of the open-frame design of the pump 100, which allows some elastic deformation of the yoke 114 and the outer pole piece 116, expansion of the freezing reagent can be accommodated by movement of the inlet means 102 and outlet means 104 away from one another.

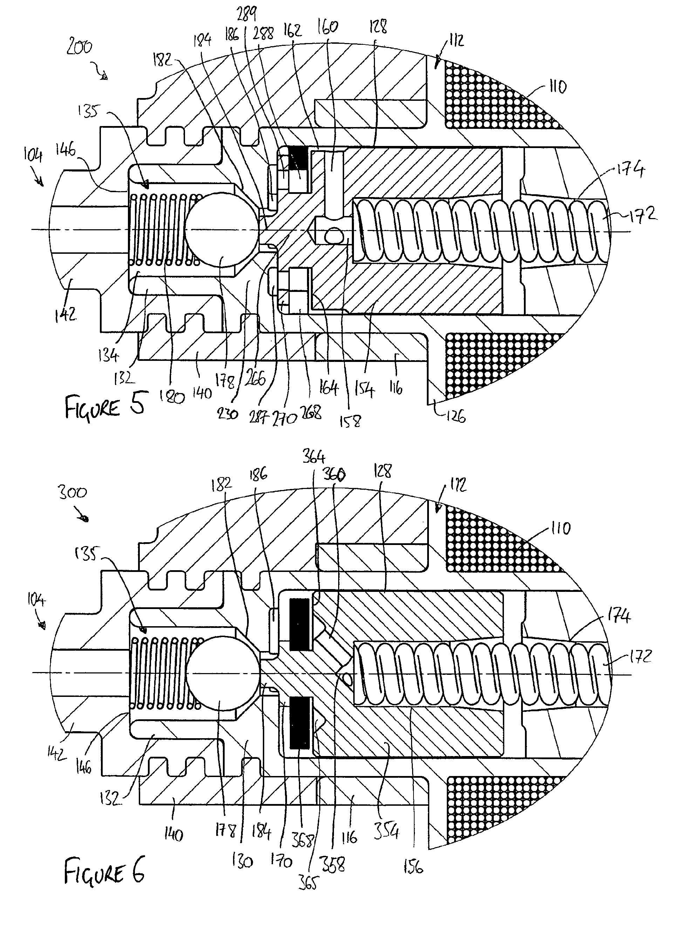

An alternative pump 200 according to the invention is shown, in part, in Figure 5. The pump 200 is similar to the pump 100 described with reference to Figures 2 to 4, and only the differences will be described. Accordingly, like reference numerals are used for like parts. The pump 200 is shown at the end of its pumping stroke in Figure 5, and therefore Figure 5 corresponds to Figure 4(a).

As in the pump 100 of Figures 2 to 4, the piston 154 of the pump 200 of Figure 5 is provided with a projection 266 having a collar 270. However, in this embodiment, the outer diameter of the collar 270 is only slightly smaller than the diameter of the piston chamber 128. In place of the sealing washer 168 of the pump 100 of Figures 2 to 4, the pump 200 of Figure 5 is provided with a split ring 268. The split ring 268 has an inner diameter sufficient to define a clearance 288 between the ring 268 and the projection 266. A plurality of apertures 289 are provided through the collar 270, to communicate with the clearance 288.

The split ring 268 is made from a low-friction material, such as PTFE, and operates in a similar manner to the sealing washer 168 of the pump 100 of Figures 2 to 4. When the pump 200 of Figure 5 is switched off, but reagent is being drawn from the outlet means 104 by an attached fluid doser, reagent can flow from the annular gallery 162 to the valve chamber 134 by way of the clearance 288, the apertures 289 in the collar 270, and the grooves 186 in the end wall 230 of the coil former 112. In this case, the radial grooves 186 in the end wall 230 of the coil former 112 are augmented by an annular groove 287 to increase the flow rate of reagent through the pump 200.

When the pump 200 is switched on and the coil 110 is energised, a filling stroke is performed and the piston 154 moves towards the inlet end of the pump 200. On de-energisation of the coil 110, the piston 154 moves back towards the outlet end of the pump 200. The split ring 268 is pushed toward the end face 164 of the piston 154, closing the clearance 288. The split ring 268 expands outwards under pressure, in order to seal against the wall of the piston chamber 128. In this way, the pressure at the outlet means 204 increases as required.

Advantageously, because the split ring 268 is in low-friction contact with the wall of the piston chamber 128, the split ring 268 moves more easily towards the outlet end of the pump 200 due to the suction of the reagent doser when the pump 200 is switched off.

Another alternative pump 300 is shown in Figure 6. Again, the pump 300 of Figure 6 is similar to the pumps of Figures 2 to 4, and only the differences will be described.

In this case, in place of the sealing washer 168 of the pump 100 of Figures 2 to 4, a smaller diameter valve washer 368 is provided. The valve washer 368 may be made from, for example, a metallic, elastomeric or plastics material.

The valve washer 368 is arranged to form a seal over an annular groove 365 in the end face 364 of the piston 354 closest to the outlet means of the pump 300. The annular groove 365 is connected to the blind bore 358 at the end of the spring recess 156 by way of inclined drillings 360 in the piston 354.

The valve washer 368 and annular groove 365 together act as an inlet non-return valve. Thus, when the pump 300 is switched off, reagent can flow through the inclined drillings 360 in the piston, past the valve washer 368 and into the outlet port 142. However, during a pumping stroke of the piston 154, the pressure of reagent acting on the valve washer 368 closes the annular groove 364 and hence the inclined drillings 360, allowing the pump 300 to pressurise the reagent at the outlet means 104.

In the pump 300 of Figure 6, the valve washer 368 does not seal against the wall of the piston chamber 128. As a result, it is not necessary to overcome the friction of such a seal during operation of the pump.

Unlike the pump 100 of Figures 2 to 4, the pumps 200, 300 shown in Figures 5 and 6 do not prevent leakage of reagent back past their respective pistons 154, 354 when the pumps 200, 300 are switched off. For example, in the case of the pump 200 of Figure 5, reagent can leak through the split in the split ring 268, whereas in the case of the pump 300 of Figure 6, reagent can leak between the piston 354 and the wall of the piston chamber 128. Therefore, the pressure at the outlet means 104 in each case will tend to decay more rapidly when the engine is switched off than is the case for the pump 100 of Figures 2 to 4.

The pumps 200, 300 of Figures 5 and 6 may each therefore be configured in an arrangement in which the pump can be operated after the engine has been switched off in order to maintain sufficient pressure in the supply line to prevent boiling of the reagent due to heat soak from the hot exhaust system. Of course, the pump 100 of Figures 2 to 4 could also be configured to run periodically after engine switch-off.

Alternatively, or in addition, the piston of any of the pumps could be provided with an additional piston seal to guard against leakage between the piston and the piston chamber wall, therefore reducing the rate of pressure decay in the supply line after engine switch-off. For example, the piston seal may comprise a ring of low-friction material received within a circumferential groove on the outside of the piston. In use, the ring bears against the piston chamber wall to form a seal.

It will be appreciated that many other modifications and variations could be made to the embodiments of the invention described above.

By way of example, a person skilled in the art that many of the parts described above as being a single component could instead be assembled from two or more components. Similarly, parts described above as being formed from two or more separate components could instead comprise single components.

The inlet valve means of a pump according to the invention need not be mounted to or otherwise associated with the piston. For instance, in a variant of the pump, the inlet valve means is provided in an end wall of the pumping chamber, for example between the piston and the inlet means.

Instead of a piston, an alternative arrangement could be used as a pumping element in the pump. For example, the piston could be replaced or supplemented by a moveable flexible diaphragm and/or a plunger arrangement.

The pumps described with reference to Figures 2 to 6 are of a type in which the pumping element undergoes a filling stroke when the solenoid actuator is energised, and in which the pumping element undergoes a pumping stroke when the solenoid actuator is de-energised. However, it is also conceivable that the pump could be arranged so that the pumping stroke occurs on energisation of the actuator, and the filling stroke occurs on de-energisation. In this case, the pressure increase caused by the pump can be controlled by adjusting the current supplied to energise the actuator.

It will be understood that the pump according to the invention is not limited to use in a system as described with reference to Figure 1, and that the pump used to pressurise the supply line in the system of Figure 1 need not be a pump according to the invention. For example, the reagent dosing system could employ a conventional pump (not forming part of the present invention) to pressurise the supply line, in which case bypass means, to allow reagent to flow directly into the supply line when the pump is not operating, could be provided. Such bypass means could, for example, include a solenoid-actuated valve upstream of the pump to direct reagent to the pump or directly to the supply line, or the bypass means could comprise a bypass line connected to the supply line on upstream and downstream sides of the pump, the bypass line having a non-return valve to prevent reagent flow from the downstream side to the upstream side of the pump.

As will be appreciated by a person skilled in the art, further modifications and variations of the invention are also possible without departing from the scope of the invention as defined in the appended claims.

## Claims

1. A reagent supply pump (100) for pressurising reagent in a supply line of a reagent dosing system, the pump (100) comprising:
inlet means (102) for receiving reagent from a reagent source;
outlet means (104) for delivering reagent to the supply line;
a solenoid-actuated pumping arrangement (108, 154) operable to pump reagent from the inlet means (102) to the outlet means (104) so as to increase the pressure of reagent at the outlet means (104); and
outlet valve means (135) operable to prevent reagent from flowing between the outlet means (104) and the pumping arrangement (108, 154);
**characterised in that** the pump (100) is arranged such that, when the pumping arrangement (108, 154) is not operating, the outlet valve means (135) is held in an open position so as to allow reagent to flow from the inlet means (102) to the outlet means (104) through the pumping arrangement (108, 154).

2. A reagent supply pump according to Claim 1, wherein the pumping arrangement (108, 154) is arranged to engage with the outlet valve means (135) when the pumping arrangement (108, 154) is not operating so as to hold the outlet valve means (135) in its open position.

3. A reagent supply pump according to Claim 2, wherein the pumping arrangement comprises:
a solenoid actuator (108);
a pumping chamber (128) disposed between the inlet means (102) and the outlet means (104) of the pump; and
a pumping element (154) arranged for reciprocal movement within the pumping chamber (128) in response to energisation and de-energisation of the solenoid actuator (108) during operation of the pumping arrangement;
wherein the pumping element (154) engages with the outlet valve means (135) when the pumping arrangement is not operating so as to hold the outlet valve means (135) in its open position.

4. A reagent supply pump according to Claim 3, wherein the outlet valve means (135) comprises a valve member (178) that is biased against a seating surface (182), and wherein the pumping element (154) is biased towards the valve member (178) to hold the valve member (178) away from the seating surface (182) when the pumping arrangement is not operating.

5. A reagent supply pump according to Claim 3 or Claim 4, wherein the pumping element (154) has a projection (184) arranged to engage with the outlet valve means (135) when the pumping arrangement is not operating.

6. A reagent supply pump according to any of Claims 3 to 5, further comprising a pumping volume (190) disposed between the pumping element (154; 354) and the outlet valve means (104), and inlet valve means (168; 268; 368) operable to prevent reagent from flowing from the pumping volume (190) to the inlet means (102).

7. A reagent supply pump according to Claim 6, wherein the inlet valve means comprises a valve element (168; 268; 368) moveable with respect to the pumping element (154; 354) between a first position, in which reagent can flow between the inlet means (102) and the pumping volume (190), and a second position, in which the valve element (168; 268; 368) prevents reagent from flowing between the inlet means (102) and the pumping volume (190).

8. A reagent supply pump according to Claim 7, comprising communication means (188; 288; 360, 365) to allow reagent to flow from the inlet means (102) when the valve element (168; 268; 368) is in the first position, the communication means (188; 288; 360, 365) being closed by the valve element (168; 268; 368) when the valve element (168; 268; 368) is in its second position.

9. A reagent supply pump according to Claim 7 or Claim 8, wherein the valve element (168; 268; 368) is moveable into the first position by reagent flow through the pump (100) when the pumping arrangement is not operating.

10. A reagent supply pump according to any of Claims 3 to 9, comprising a biasing spring (172) to bias the pumping element (154) towards the outlet means (104).

11. A reagent supply pump according to Claim 10, wherein, when the pumping arrangement is not operating, the pressure of reagent at the outlet means (104) is maintained by the biasing spring (172).

12. A reagent dosing system (10) for an internal combustion engine having an exhaust pipe (20), the system comprising:
a first pump (26) having inlet means (30) for receiving reagent from a reagent source (22) and outlet means (32) for delivering the reagent to a supply line (28); and
a fluid dosing device (12) downstream of the first pump (26), comprising a nozzle (16) and a second pump (14) for receiving the reagent from the supply line (28) and for delivering the reagent to the nozzle (16), the second pump (14) being operable to increase the pressure of the reagent in the nozzle (16) to an injection pressure so as to cause delivery of the reagent through the nozzle (16);
wherein the first pump (26) is operable to increase the pressure of reagent in the supply line (28) to a pressure that is less than the injection pressure so as to guard against overheating of the reagent in the supply line (28);
and wherein the first pump (26) is a reagent supply pump according to any of Claims 1 to 11.

13. A reagent dosing system according to Claim 12, further comprising control means arranged to operate the first pump (26) selectively according to an operating condition of the reagent dosing system and/or the internal combustion engine.

14. A reagent dosing system according to Claim 13, wherein the control means is arranged to monitor at least one operating or environmental condition of the reagent dosing system and/or the engine to determine when overheating of reagent in the supply line (28) is likely to occur; and to operate the first pump (26) when it is determined that overheating of reagent in the supply line (28) is likely to occur.

## Patentansprüche

1. Reagenzförderpumpe (100) zum Druckbeaufschlagen von Reagenz in einer Versorgungsleitung eines Reagenzdosiersystems, wobei die Pumpe (100) Folgendes aufweist:
Einlassmittel (102) zum Aufnehmen von Reagenz aus einer Reagenzquelle,
Auslassmittel (104) zum Abgeben von Reagenz in die Versorgungsleitung,
eine elektromagnetbetätigte Pumpanordnung (108, 154) zum Fördern von Reagenz von dem Einlassmittel (102) zu dem Auslassmittel (104), um den Reagenzdruck am Auslassmittel (104) zu erhöhen, und
Auslassventilmittel (135) zum Verhüten, dass Reagenz zwischen dem Auslassmittel (104) und der Pumpanordnung (108, 154) fließt,
**dadurch gekennzeichnet, dass** die Pumpe (100) so angeordnet ist, dass das Auslassventilmittel (135) in einer offenen Stellung gehalten wird, wenn die Pumpanordnung (108, 154) nicht in Betrieb ist, um Reagenz vom Einlassmittel (102) durch die Pumpanordnung (108, 154) zum Auslassmittel (104) fließen zu lassen.

2. Reagenzförderpumpe nach Anspruch 1, wobei die Pumpanordnung (108, 154) so angeordnet ist, dass sie mit dem Auslassventilmittel (135) in Eingriff kommt, wenn die Pumpanordnung (108, 154) nicht in Betrieb ist, um das Auslassventilmittel (135) in seiner offenen Stellung zu halten.

3. Reagenzförderpumpe nach Anspruch 2, wobei die Pumpanordnung Folgendes aufweist:
einen elektromagnetischen Aktor (108),
eine Pumpkammer (128), die zwischen dem Einlassmittel (102) und dem Auslassmittel (104) der Pumpe angeordnet ist, und
ein Pumpelement (154), das für hin- und hergehende Bewegung in der Pumpkammer (128) als Reaktion auf Bestromen und Entstromen des elektromagnetischen Aktors (108) während des Betriebs der Pumpanordnung angeordnet ist,
wobei das Pumpelement (154) mit dem Auslassventilmittel (135) in Eingriff kommt, wenn die Pumpanordnung nicht in Betrieb ist, um das Auslassventilmittel (135) in seiner offenen Stellung zu halten.

4. Reagenzförderpumpe nach Anspruch 3, wobei das Auslassventilmittel (135) ein Ventilelement (178) aufweist, das gegen eine Sitzfläche (182) vorgespannt ist, und wobei das Pumpelement (154) zum Ventilelement (178) hin vorgespannt ist, um das Ventilelement (178) von der Sitzfläche (182) weg zu halten, wenn die Pumpanordnung nicht in Betrieb ist.

5. Reagenzförderpumpe nach Anspruch 3 oder Anspruch 4, wobei das Pumpelement (154) einen Vorsprung (184) hat, der so angeordnet ist, dass er mit dem Auslassventilmittel (135) in Eingriff kommt, wenn die Pumpanordnung nicht in Betrieb ist.

6. Reagenzförderpumpe nach einem der Ansprüche 3 bis 5, die ferner ein Pumpvolumen (190), das zwischen dem Pumpelement (154; 354) und dem Auslassventilmittel (104) angeordnet ist, und ein Einlassventilmittel (168; 268; 368) zum Verhüten, dass Reagenz von dem Pumpvolumen (190) zum Einlassmittel (102) fließt, aufweist.

7. Reagenzförderpumpe nach Anspruch 6, wobei das Einlassventilmittel ein Ventilelement (168; 268; 368) aufweist, das im Verhältnis zu dem Pumpelement (154; 354) zwischen einer ersten Stellung, in der Reagenz zwischen dem Einlassmittel (102) und dem Pumpvolumen (190) fließen kann, und einer zweiten Stellung, in der das Ventilelement (168; 268; 368) verhütet, dass Reagenz zwischen dem Einlassmittel (102) und dem Pumpvolumen (190) fließt, bewegbar ist.

8. Reagenzförderpumpe nach Anspruch 7, die ein Kommunikationsmittel (188; 288; 360, 365) aufweist, um Reagenz aus dem Einlassmittel (102) fließen zu lassen, wenn das Ventilelement (168; 268; 368) in der ersten Stellung ist, wobei das Kommunikationsmittel (188; 288; 360, 365) von dem Ventilelement (168; 268; 368) geschlossen wird, wenn das Ventilelement (168; 268; 368) in seiner zweiten Stellung ist.

9. Reagenzförderpumpe nach Anspruch 7 oder Anspruch 8, wobei das Ventilelement (168; 268; 368) von Reagenzfluss durch die Pumpe (100) in die erste Stellung bewegbar ist, wenn die Pumpenanordnung nicht in Betrieb ist.

10. Reagenzförderpumpe nach einem der Ansprüche 3 bis 9, die eine Vorspannfeder (172) zum Vorspannen des Pumpelements (154) zum Auslassmittel (104) hin aufweist.

11. Reagenzförderpumpe nach Anspruch 10, wobei, wenn die Förderanordnung nicht in Betrieb ist, der Reagenzdruck am Auslassmittel (104) von der Vorspannfeder (172) aufrecht erhalten wird.

12. Reagenzdosiersystem (10) für eine Verbrennungskraftmaschine mit einem Abgasrohr (20), wobei das System Folgendes aufweist:
eine erste Pumpe (26) mit einem Einlassmittel (30) zum Aufnehmen von Reagenz aus einer Reagenzquelle (22) und einem Auslassmittel (32) zum Abgeben des Reagenz in eine Versorgungsleitung (28), und
eine der ersten Pumpe (26) nachgestellte Fluiddosiervorrichtung (12), die eine Düse (16) und eine zweite Pumpe (14) zum Aufnehmen des Reagenz aus der Versorgungsleitung (28) und zum Abgeben des Reagenz an die Düse (16) aufweist, wobei die zweite Pumpe (14) die Aufgabe hat, den Druck des Reagenz in der Düse (16) auf einen Einspritzdruck zu erhöhen, um die Abgabe des Reagenz durch die Düse (16) zu veranlassen,
wobei die erste Pumpe (26) die Aufgabe hat, den Reagenzdruck in der Versorgungsleitung (28) auf einen Druck zu erhöhen, der niedriger als der Einspritzdruck ist, um vor Überhitzung des Reagenz in der Versorgungsleitung (28) zu schützen,
und wobei die zweite Pumpe (26) eine Reagenzförderpumpe nach einem der Ansprüche 1 bis 11 ist.

13. Reagenzdosiersystem nach Anspruch 12, das ferner eine Steuereinrichtung aufweist, die zum selektiven Betreiben der ersten Pumpe (26) gemäß einer Betriebsbedingung des Reagenzdosiersystems und/oder der Verbrennungskraftmaschine angeordnet ist.

14. Reagenzdosiersystem nach Anspruch 13, wobei die Steuereinrichtung zum Überwachen von wenigstens einer Betriebs- oder Umgebungsbedingung des Reagenzdosiersystems und/oder der Maschine angeordnet ist, um zu ermitteln, wenn eine Überhitzung von Reagenz in der Versorgungsleitung (28) wahrscheinlich stattfinden wird, und um die erste Pumpe (26) zu betreiben, wenn ermittelt wird, dass eine Überhitzung von Reagenz in der Versorgungsleitung (28) wahrscheinlich stattfinden wird.

## Revendications

1. Pompe d'alimentation de réactif (100) pour mettre sous pression un réactif dans une ligne d'alimentation d'un système de dosage de réactif, la pompe (100) comprenant :
un moyen d'entrée (102) pour recevoir un réactif depuis une source de réactif ;
un moyen de sortie (104) pour fournir le réactif à la ligne d'alimentation ;
un agencement de pompage actionné par solénoïde (108, 154) dont la fonction est de pomper du réactif depuis le moyen d'entrée (102) vers le moyen de sortie (104) de manière à augmenter la pression du réactif au moyen de sortie (104) ; et
un moyen formant valve de sortie (135) dont la fonction est d'empêcher au réactif de s'écouler entre le moyen de sortie (104) et l'agencement de pompage (108, 154) ;
**caractérisée en ce que** la pompe (100) est agencée de telle façon que, quand l'agencement de pompage (108, 154) n'est pas en fonctionnement, le moyen formant valve de sortie (135) est maintenu dans une position ouverte de façon à permettre au réactif de s'écouler depuis le moyen d'entrée (102) vers le moyen de sortie (104) via l'agencement de pompage (108, 154).

2. Pompe d'alimentation de réactif selon la revendication 1, dans laquelle l'agencement de pompage (108, 154) est agencé pour être engagé avec le moyen formant valve de sortie (135) quand l'agencement de pompage (108, 154) n'est pas en fonctionnement de manière à maintenir le moyen formant valve de sortie (135) dans sa position ouverte.

3. Pompe d'alimentation de réactif selon la revendication 2, dans laquelle l'agencement de pompage comprend :
un actionneur à solénoïde (108) ;
une chambre de pompage (128) disposée entre le moyen d'entrée (102) et le moyen de sortie (104) de la pompe ; et
un élément de pompage (154) agencé pour un mouvement de va-et-vient à l'intérieur de la chambre de pompage (128) en réponse à l'excitation est à la désexcitation de l'actionneur à solénoïde (108) pendant le fonctionnement de l'agencement de pompage ;
dans lequel l'élément de pompage (154) est engagé avec le moyen formant valve de sortie (135) quand l'agencement de pompage n'est pas en fonctionnement de manière à maintenir le moyen formant valve de sortie (135) dans sa position ouverte.

4. Pompe d'alimentation de réactif selon la revendication 3, dans laquelle le moyen formant valve de sortie (135) comprend un élément de valve (178) qui est sollicité contre une surface de siège (182), et dans laquelle l'élément de pompage (154) est sollicité vers l'élément de valve (178) pour maintenir l'élément de valve (178) en éloignement de la surface de siège (182) quand l'agencement de pompage n'est pas en fonctionnement.

5. Pompe d'alimentation de réactif selon la revendication 3 ou 4, dans laquelle l'élément de pompage (154) comporte une projection (184) agencée pour être engagée avec le moyen formant valve de sortie (135) quand l'agencement de pompage n'est pas en fonctionnement.

6. Pompe d'alimentation de réactif selon l'une quelconque des revendications 3 à 5, comprenant en outre un volume de pompage (190) disposé entre l'élément de pompage (154 ; 354) et le moyen formant valve de sortie (104), et le moyen formant valve d'entrée (168 ; 268 ; 368) ayant pour fonction d'empêcher au réactif de s'écouler depuis le volume de pompage (190) vers le moyen d'entrée (102).

7. Pompe d'alimentation de réactif selon la revendication 6, dans laquelle le moyen formant valve d'entrée comprend un élément de valve (168 ; 268 ; 368) mobile par rapport à l'élément de pompage (154 ; 354) entre une première position dans laquelle le réactif peut s'écouler entre le moyen d'entrée (102) et le volume de pompage (190), et une seconde position dans laquelle l'élément de valve (168 ; 268 ; 368) empêche au réactif de s'écouler entre le moyen d'entrée (102) et le volume de pompage (190).

8. Pompe d'alimentation de réactif selon la revendication 7, comprenant un moyen de communication (188 ; 288 ; 360, 365) pour permettre au réactif de s'écouler depuis le moyen d'entrée (102) quand l'élément de valve (168 ; 268 ; 368) est dans la première position, le moyen de communication (188 ; 288 ; 360, 365) étant fermé par l'élément de valve (168 ; 268 ; 368) quand l'élément de valve (168 ; 268 ; 368) est dans sa seconde position.

9. Pompe d'alimentation de réactif selon la revendication 7 ou 8, dans laquelle l'élément de valve (168 ; 268 ; 368) est mobile vers la première position sous le flux de réactif à travers la pompe (100) quand l'agencement de pompage n'est pas en fonctionnement.

10. Pompe d'alimentation de réactif selon l'une quelconque des revendications 3 à 9, comprenant un ressort de sollicitation (172) pour solliciter l'élément de pompage (154) vers le moyen de sortie (104).

11. Pompe d'alimentation de réactif selon la revendication 10, dans laquelle, quand l'agencement de pompage n'est pas en fonctionnement, la pression du réactif au moyen de sortie (104) est maintenue par le ressort de sollicitation (172).

12. Système de dosage de réactif (10) pour un moteur à combustion interne ayant un tube d'échappement (20), le système comprenant :
une première pompe (26) ayant un moyen d'entrée (30) pour recevoir un réactif depuis une source de réactif (22) et un moyen de sortie (32) pour fournir le réactif à une ligne d'alimentation (28) ; et
un dispositif de dosage de fluide (12) en aval de la première pompe (26), comprenant une buse (16) et une seconde pompe (14) pour recevoir le réactif depuis la ligne d'alimentation (28) et pour fournir le réactif à la buse (16), la seconde pompe (14) ayant pour fonction d'augmenter la pression du réactif dans la buse (16) à une pression d'injection de manière à provoquer la distribution du réactif via la buse (16) ;
dans lequel la première pompe (26) a pour fonction d'augmenter la pression du réactif dans la ligne d'alimentation (28) à une pression qui est inférieure à la pression d'injection, de manière à assurer une protection à l'encontre d'une surchauffe du réactif dans la ligne d'alimentation (28) ;
et dans lequel la première pompe (26) est une pompe d'alimentation de réactif selon l'une quelconque des revendications 1 à 11.

13. Système de dosage de réactif selon la revendication 12, comprenant en outre un moyen de commande agencée pour faire fonctionner la première pompe (26) sélectivement en accord avec une condition de fonctionnement du système de dosage de réactif et/ou du moteur à combustion interne.

14. Système de dosage de réactif selon la revendication 13, dans lequel le moyen de commande est agencé pour surveiller au moins une condition opératoire ou environnementale du système de dosage de réactif et/ou du moteur pour déterminer quand une surchauffe du réactif dans la ligne d'alimentation (28) est susceptible de se produire ; et pour faire fonctionner la première pompe (26) s'il détermine qu'une surchauffe du réactif dans la ligne d'alimentation (28) est susceptible de se produire.
